# EUROPEAN PATENT APPLICATION

(11) **EP 4 686 218 A1**
(43) Date of publication of application: **28.01.2026**
(21) Application number: 24810720.3
(22) Date of filing: 01.04.2024
(51) Int. Cl.: H04Q 9/00, E02F 3/84, E02F 9/20, H04N 7/18

(54) **INFORMATION SYSTEM AND OPERATION DEVICE**

(30) Priority: 23.05.2023 JP 2023084765
(71) Applicant: KOBELCO CONSTRUCTION MACHINERY CO., LTD., Hiroshima-shi, Hiroshima 731-5161 (JP)
(72) Inventor: HIROSE, Ryuichi, Hiroshima-shi, Hiroshima 731-5161 (JP)
(74) Representative: TBK
(86) International application number: PCT/JP2024/013468
(87) International publication number: WO 2024/241712

(57) **Abstract**

An information system determines, according to a linkage state between an operation device and an operation target of the operation device, whether or not storage of information acquired by at least one of the operation device and the operation target as designated devices is necessary.

## Description

### Technical Field

The present invention relates to an information system and an operation device.

### Background Art

According to a system for remotely operating a work machine, a video signal captured by a camera provided in the work machine is transmitted via a line network and displayed on a monitor device of a remote operation device (control room) installed at a remote place (see, for example, Patent Literature 1).

### Citation List

### Patent Literature

Patent Literature 1: JP 2013-168777 A

There is a demand for a system that allows storage of image data displayed on a monitor device of a remote operation device as operation history information of a work machine and reference to the stored image data.

However, if image data is stored even in a situation where a work machine is not remotely operated by an operator of a remote operation device, processing of storing image data of low necessity showing a situation where the work machine is not remotely operated is required, which causes enlargement of a system configuration.

Further, in a case where there are a plurality of work machines as operation targets of a remote operation device, if all pieces of image data corresponding to a plurality of the work machines are stored, processing of storing not only image data corresponding to a work machine that is remotely operated but also image data corresponding to a work machine that is not remotely operated is required, which causes enlargement of a system configuration.

### Summary of Invention

An object of the present invention is to provide an information system and an operation device capable of suppressing enlargement of a system configuration.

An information system according to the present invention determines, according to a linkage state between an operation device and an operation target of the operation device, whether or not storage of information acquired by at least one of the operation device and the operation target as designated devices is necessary.

To "acquire" information is a concept including acquiring (detecting and measuring) the information by using a sensor or the like and receiving the information by using a communication device. In addition to determination as to whether or not information primarily acquired by a first designated device and secondarily acquired (or received) by a second designated device from the first designated device needs to be stored in the second designated device and/or an external device, whether or not information primarily acquired by the first designated device needs to be stored in the first designated device and/or an external device may be determined.

An operation device according to a first aspect of the present invention includes: a display device that displays image data received from an operation target; and a processing device that determines, as a storage target, the image data displayed in a case where the operation target is being operated.

An operation device according to a second aspect of the present invention includes: a display device that selects and displays image data received from a current operation target that is one operation target candidate among a plurality of operation target candidates that may be operation targets of an operation device; and a processing device that determines, as a storage target, the image data displayed on the display device when the operation target is operated by the operation device.

### Brief Description of Drawings

FIG. 1 is an explanatory diagram related to a configuration of an information system.
FIG. 2 is an explanatory diagram related to a configuration of a remote operation device.
FIG. 3 is an explanatory diagram related to a configuration of a work machine.
FIG. 4 is an explanatory diagram related to a function of the information system.
FIG. 5 is an explanatory diagram related to a work environment image.

### Description of Embodiments

### (Configuration of Information System)

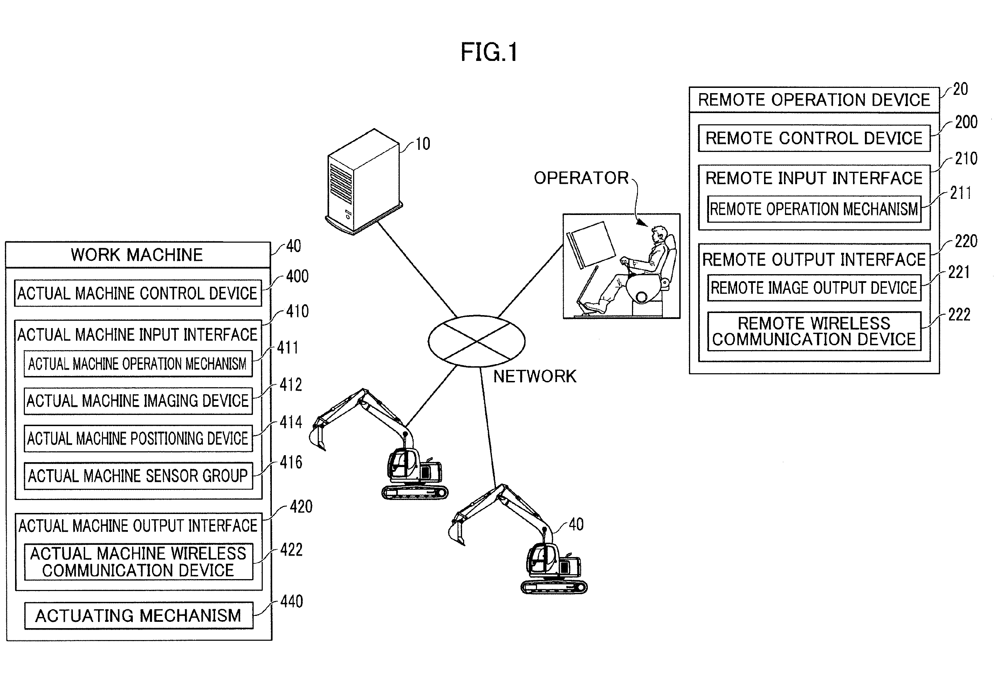

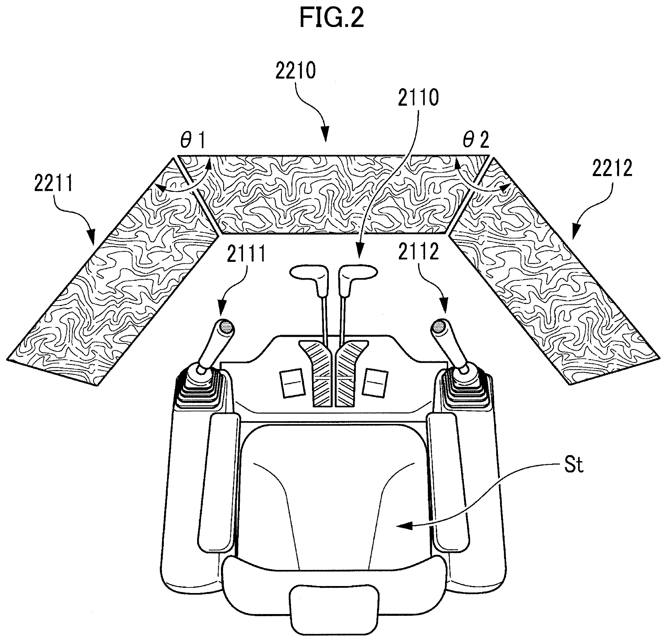

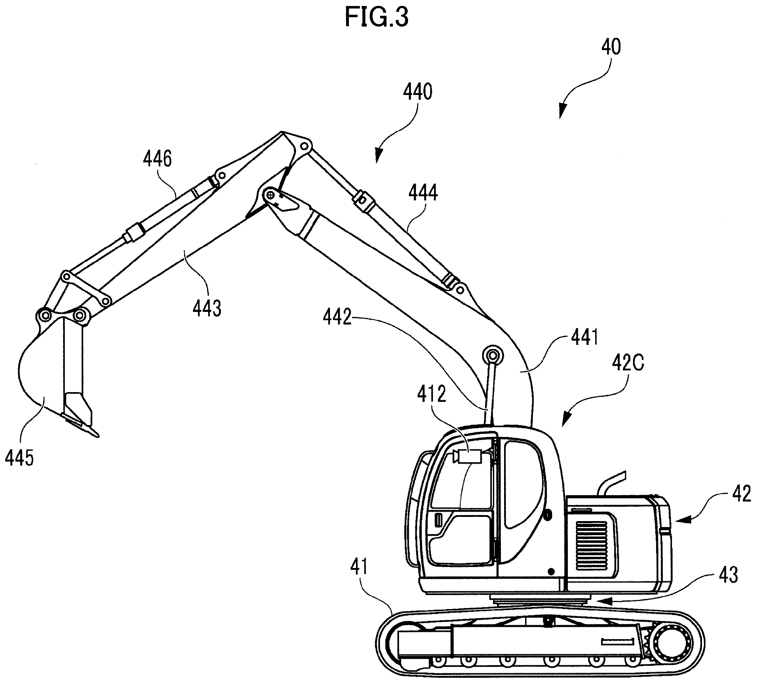

FIG. 1 is an explanatory diagram related to a configuration of an information system. FIG. 2 is an explanatory diagram related to a configuration of a remote operation device. FIG. 3 is an explanatory diagram related to a configuration of a work machine. The information system according to an embodiment of the present invention illustrated in FIG. 1 includes a remote operation device 20 (operation device) configured to be able to perform network communication with each of an external server 10 and a work machine 40 (operation target). Note that the information system may be configured to include at least one of the external server 10 and the work machine 40 (operation target).

### (Configuration of Remote Operation Device)

As illustrated in FIG. 1, the remote operation device 20 includes a remote control device 200 (processing device), a remote input interface 210, and a remote output interface 220. The remote control device 200 includes an arithmetic processing device (a single-core processor or a multi-core processor or a processor core constituting this), reads necessary data and software from a storage device such as a memory, and executes arithmetic processing according to the software on the data.

The remote input interface 210 includes a remote operation mechanism 211. The remote output interface 220 includes a remote image output device 221 (display device) and a remote wireless communication device 222.

The remote operation mechanism 211 includes a travelling operation device, a slewing operation device, a boom operation device, an arm operation device, and a bucket operation device. Each operation device includes an operation lever that receives a rotation operation. An operation lever (travel lever) of the travelling operation device is operated to move a lower travelling body 41 of the work machine 40. The travel lever may also serve as a travel pedal. For example, a travel pedal fixed to a base portion or a lower end portion of the travel lever may be provided. An operation lever (slewing lever) of the slewing operation device is operated to move a hydraulic slewing motor constituting a slewing mechanism 43 of the work machine 40. An operation lever (boom lever) of the boom operation device is operated to move a boom cylinder 442 of the work machine 40. An operation lever (arm lever) of the arm operation device is operated to move an arm cylinder 444 of the work machine 40. An operation lever (bucket lever) of the bucket operation device is operated to move a bucket cylinder 446 of the work machine 40.

For example, as illustrated in FIG. 2, operation levers constituting the remote operation mechanism 211 are arranged around a seat St on which an operator sits. The seat St is in a form of a high back chair with an armrest, but may be a seating portion in any form that allows an operator to sit, such as in a form of a low back chair without a headrest or in a form of a chair without a backrest.

Left and right travelling levers 2110 corresponding to left and right crawlers are arranged side by side in front of the seat St. One operation lever may also serve as a plurality of operation levers. For example, the left operation lever 2111 provided in front of a left frame of the seat St illustrated in FIG. 2 may function as an arm lever in a case of being operated in a front-rear direction, and may function as a slewing lever in a case of being operated in a left-right direction. Similarly, a right operation lever 2112 provided in front of a right frame of the seat St illustrated in FIG. 2 may function as a boom lever in a case of being operated in the front-rear direction, and may function as a bucket lever in a case of being operated in the left-right direction. A lever pattern may be arbitrarily changed by an operation instruction of an operator.

The remote image output device 221 includes a single or a plurality of image output devices. The remote image output device 221 includes a capture board (output processing device) that outputs input video information to a screen of an image output device, and a hub (relay device) that inputs video information to the capture board according to a determination result of transmitted video information. In the present embodiment, a captured image as first actual machine information is input to the capture board via the hub according to a determination result of the first actual machine information transmitted as video information from the work machine 40 (details will be described later). As illustrated in FIG. 2, for example, the remote image output device 221 includes a central remote image output device 2210, a left remote image output device 2211, and a right remote image output device 2212 each having a substantially rectangular screen arranged in front of the seat St, diagonally forward left, and diagonally forward right. Shapes and sizes of screens (image display regions) of the central remote image output device 2210, the left remote image output device 2211, and the right remote image output device 2212 may be the same or different. The remote image output device 221 may include a single curved or bendable image output device, two or four or more image output devices arranged to surround the front of the sheet St.

As illustrated in FIG. 2, a right edge of the left remote image output device 2211 is adjacent to a left edge of the central remote image output device 2210 such that a screen of the central remote image output device 2210 and a screen of the left remote image output device 2211 form an inclination angle θ1 (for example, 120° ≤ θ1 ≤ 150°). As illustrated in FIG. 2, a left edge of the right remote image output device 2212 is adjacent to a right edge of the central remote image output device 2210 such that a screen of the central remote image output device 2210 and a screen of the right remote image output device 2212 form an inclination angle θ2 (for example, 120° ≤ θ2 ≤ 150°). The inclination angles θ1 and θ2 may be the same or different.

A screen of each of the central remote image output device 2210, the left remote image output device 2211 and the right remote image output device 2212 may be parallel to a vertical direction or may be inclined with respect to the vertical direction. At least one of the central remote image output device 2210, the left remote image output device 2211, and the right remote image output device 2212 may include a plurality of divided image output devices. For example, the central remote image output device 2210 may include vertically adjacent image output devices having a substantially rectangular screen.

### (Configuration of Work Machine)

As illustrated in FIG. 1, the work machine 40 includes an actual machine control device 400, an actual machine input interface 410, an actual machine output interface 420, and an actual machine wireless communication device 422. Each constituent element of the actual machine control device 400 includes an arithmetic processing device (a single-core processor or a multi-core processor or a processor core constituting this), reads necessary data and software from a storage device such as a memory, and executes arithmetic processing according to the software on the data.

The work machine 40 is, for example, a crawler excavator (construction machine), and as illustrated in FIG. 3, includes the lower travelling body 41 of a crawler type, and an upper slewing body 42 slewably mounted on the lower travelling body 41 via the slewing mechanism 43. A cab 42C (operator's cab) is provided in a front left side portion of the upper slewing body 42. A work mechanism 44 is provided in a front central portion of the upper slewing body 42.

The actual machine input interface 410 includes an actual machine operation mechanism 411, an actual machine imaging device 412, an actual machine positioning device 414, and an actual machine sensor group 416. The actual machine operation mechanism 411 includes a plurality of operation levers arranged around a seat arranged inside the cab 42C in the same manner as the remote operation mechanism 211. A drive mechanism or a robot that receives a signal corresponding to an operation mode of a remote operation lever and moves an actual machine operation lever based on the received signal is provided in the cab 42C. The actual machine imaging device 412 is installed inside the cab 42C, for example, and images an environment including at least a part of the work mechanism 44 through a front window and left and right side windows. Some or all of the front window and the side window may be omitted. The actual machine positioning device 414 includes a GPS or a GNSS, and a gyro sensor or the like as necessary, and measures a position (latitude and longitude) of the work machine 40.

The actual machine sensor group 416 is configured to output, to the actual machine control device 400, a signal corresponding to a value of a parameter related to a state of the work machine 40, such as a raising and lowering angle of a boom 441 with respect to the upper slewing body 42, a rotation angle of an arm 443 with respect to the boom 441, a rotation angle of a bucket 445 with respect to the arm 443, hydraulic pressure, and a remaining fuel amount.

As illustrated in FIG. 3, the work mechanism 44 includes the boom 441 mounted on the upper slewing body 42 so as to be raised and lowered, the arm 443 rotatably connected to a tip of the boom 441, and the bucket 445 (tip attachment) rotatably connected to a tip of the arm 443. The work mechanism 44 is mounted with a boom cylinder 442, an arm cylinder 444, and a bucket cylinder 446 that include a telescopic hydraulic cylinder.

The boom cylinder 442 is interposed between the boom 441 and the upper slewing body 42 so as to expand and contract by receiving supply of hydraulic oil to rotate the boom 441 in a raising and lowering direction. The arm cylinder 444 is interposed between the arm 443 and the boom 441 so as to expand and contract by receiving supply of hydraulic oil to rotate the arm 443 about a horizontal axis with respect to the boom 441. The bucket cylinder 446 is interposed between the bucket 445 and the arm 443 so as to expand and contract by receiving supply of hydraulic oil to rotate the bucket 445 about a horizontal axis with respect to the arm 443.

### (Function)

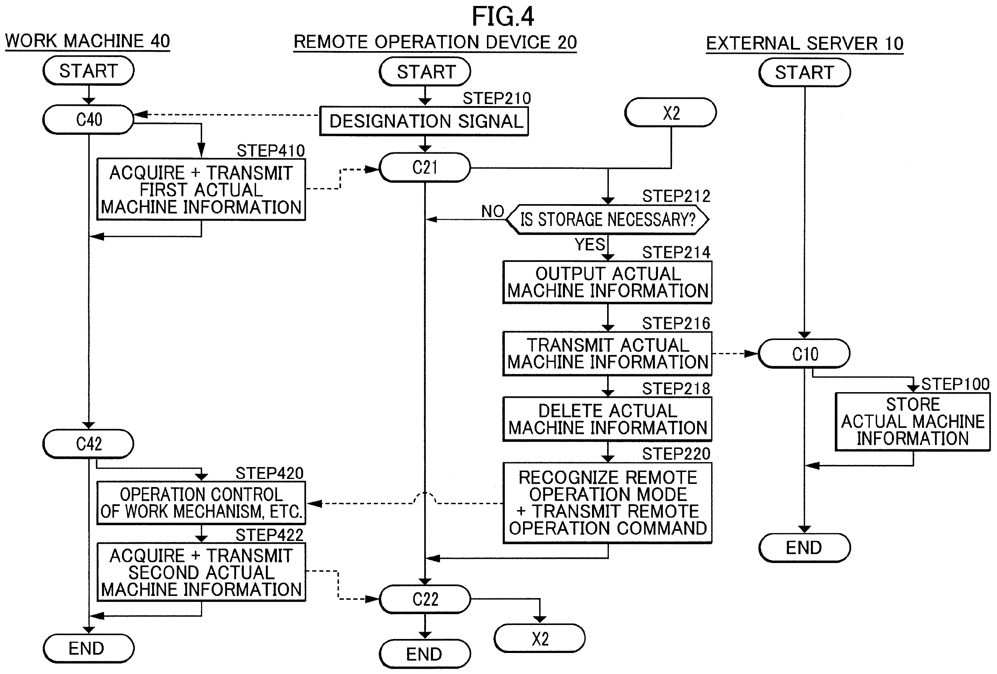

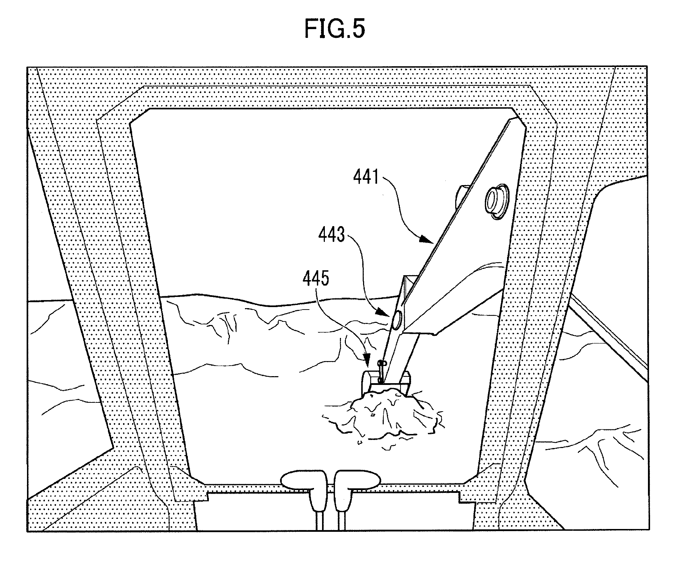

FIG. 4 is an explanatory diagram related to a function of the information system. FIG. 5 is an explanatory diagram related to a work environment image. Functions of a construction support device and an imaging function control system having the above configuration will be described with reference to a flowchart illustrated in FIG. 4. In the flowchart, a block "C(number)" is used for simplification of description, and means transmission and/or receiving of data, and conditional branching in which processing in a branch direction is executed on condition of transmission and/or receiving of the data.

In the remote operation device 20, the remote control device 200 transmits a designation signal to the work machine 40 through the remote wireless communication device 222 (STEP210 in FIG. 4). In a case where a plurality of the work machines 40 are a plurality of operation target candidates, a designation signal may be transmitted to each of a plurality of the work machines 40. The presence or absence of a designation operation through the remote input interface 210 may be determined by an operator, and a designation signal may be transmitted when the determination result is positive. The "designation operation" is, for example, an operation such as a tap on the remote input interface 210 for designating the work machine 40 intended to be remotely operated by an operator.

In the work machine 40, in a case where a designation signal is received through the actual machine wireless communication device 422 (C40 in FIG. 4), a captured image (camera image, to which appropriate image processing may be applied) acquired by the actual machine control device 400 through the actual machine imaging device 412 is transmitted to the remote operation device 20 as "first actual machine information" (STEP410 in FIG. 4). A captured image (or captured image data) may be image data representing a simulated environmental image generated based on a captured image in addition to a captured image itself.

In the remote operation device 20, in a case where the first actual machine information is received through the remote wireless communication device 222 (C21 in FIG. 4), the remote control device 200 determines whether or not it is necessary to store the first actual machine information according to a linkage state between the remote operation device 20 and the work machine 40 (STEP212 in FIG. 4). For example, by the remote control device 200, the determination processing is executed according to whether or not a captured image as the first actual machine information is acquired by a current operation target (one operation target candidate) in a state where the remote operation by the remote operation device 20 is possible.

According to whether or not an actual machine identifier received together with a captured image by the remote control device 200 matches an actual machine identifier of the work machine 40 that is one operation target candidate currently designated by the user through the remote input interface 210 from among a plurality of operation target candidates, the one operation target candidate may be determined and further, the determination processing may be executed. Other than the above, the determination processing may be executed according to whether or not the first actual machine information is acquired by the work machine 40 in a state of being able to communicate with the remote operation device 20. When the work machine 40 is in a state in which remote operation by the remote operation device 20 is possible and is actually remotely operated through the remote operation mechanism 211, the determination processing may be executed according to whether or not the first actual machine information is acquired by the work machine 40.

In a case where the determination result is negative (NO in STEP212 in FIG. 4), a hub is controlled so that a captured image as the first actual machine information is not input to a capture board by the remote control device 200.

On the other hand, in a case where the determination result is positive (YES in STEP212 in FIG. 4), a hub is controlled so that the first actual machine information is input to a capture board by the remote control device 200, and a captured image as the first actual machine information is output to the remote image output device 221 (display device) via the capture board (STEP214 in FIG. 4). By this, for example, as illustrated in FIG. 5, a captured image in which, in addition to the ground spreading in front of the cab 42C, the boom 441, the arm 443, which are a part of the work mechanism 44, and a pile of gravel or earth and sand (which is a work target by the bucket 445) in a construction target region are shown is output to the remote image output device 221. A captured image input to a capture board may be obtained by performing processing (processing of superimposing a symbol, a character, a sign image serving as a mark, or the like on a captured image, or the like) on a captured image transmitted from the work machine 40.

Further, by the remote control device 200, the captured image (first actual machine information) output (STEP214 in FIG. 4) to the remote image output device 221 is determined as a storage target. Specifically, a captured image (first actual machine information) output to the remote image output device 221 by the remote control device 200 via a capture board is determined as a storage target by being at least temporarily stored or held in a storage device (or a designated region of a memory, or the like) of the remote control device 200. The first actual machine information stored or stored and held in the storage device may be recorded video information output to the remote image output device 221. Then, through the remote wireless communication device 222 by the remote control device 200, the captured image (first actual machine information) as a storage target stored or held in the storage device is transmitted or uploaded to the external server 10 by the remote control device 200 as the "designated device" (STEP216 in FIG. 4). At this time, an actual machine identifier for identifying the work machine 40 and a remote identifier for identifying the remote operation device 20 may be transmitted or uploaded to the external server 10 in association with the captured image. In a case where the captured image (first actual machine information) is received by the external server 10 (C10 in FIG. 4), the captured image is stored or held in an information storage resource or a database in a cloud (STEP100 in FIG. 4).

After the above, in a case where a certain period of time elapses, the captured image transmitted to the external server 10 is deleted from the storage device of the remote operation device 20 (STEP218 in FIG. 4).

In the remote operation device 20, an operation mode of the remote operation mechanism 211 is recognized by the remote control device 200, and a remote operation command corresponding to the operation mode is transmitted to the work machine 40 through the remote wireless communication device 222 (STEP220 in FIG. 4).

In the work machine 40, in a case where a remote operation command is received by the actual machine control device 400 through the actual machine wireless communication device 422 (C42 in FIG. 4), an operation of the work mechanism 44 and the like is controlled according to the remote operation command (STEP420 in FIG. 4). For example, an operation of excavating and scooping up soil in a construction target region in front of the work machine 40 by the bucket 445, slewing the upper slewing body 42, and then dropping the soil from the bucket 445 to the outside of the construction target region is executed.

Furthermore, the actual machine control device 400 acquires a state (may include second actual machine information) of the work machine 40 based on an output signal of the actual machine sensor group 416, and transmits the acquired state to the remote operation device 20 (STEP422 in FIG. 4). The "second actual machine information" may include a value of at least one parameter related to a state of the work machine 40 among a current position of the work machine 40, an inclination angle of the upper slewing body 42, a raising and lowering angle of the boom 441 with respect to the upper slewing body 42, a rotation angle of the arm 443 with respect to the boom 441, a rotation angle of the bucket 445 with respect to the arm 443, hydraulic pressure, a remaining fuel amount, and the like. The "second actual machine information" may include an operation mode of the remote operation mechanism 211 (an operation amount or an inclination angle of an operation lever constituting the remote operation mechanism 211), a remote operation command according to the operation mode, and/or an operation mode of an operation lever or the like constituting the actual machine operation mechanism 411 controlled in accordance with the remote operation command.

In the remote operation device 20, when the second actual machine information is received through the remote wireless communication device 222 (C22 in FIG. 4), the second actual machine information is at least temporarily stored or held in a storage device (or a designated region of a memory) by the remote control device 200. Furthermore, processing in and after the processing of determining whether or not the first actual machine information needs to be stored is repeated by the remote control device 200 (see STEP212 to STEP220 in FIG. 4).

### (Operation and Effect)

According to the information system that exerts the function, a hub is controlled in such a manner that, in the "first actual machine information" acquired by the work machine 40 (operation target) and then transmitted to the remote operation device 20, information determined to be unnecessary according to a linkage state between the remote operation device 20 and the operation target (for example, distinction between an operable state or the inoperable state) is not input to a capture board, and for this reason, the information is not stored in the remote operation device 20 and is not transmitted to the external server 10, and thus is not stored in the external server 10 (NO in STEP212 in FIG. 4). For this reason, overall information storage capacity of the remote operation device 20 as a designated device and the external server 10 and information communication capacity between the remote operation device 20 and the external server 10 may be reduced, and an enlargement of a system configuration may be suppressed.

In the first actual machine information acquired by the work machine 40 (operation target) and then transmitted to the remote operation device 20, information transmitted from the remote operation device 20 to the external server 10 is deleted from the remote operation device 20 (see STEP216 to STEP218 in FIG. 4). For this reason, since waste caused by unlimited storage of the same information in both the remote operation device 20 and the external server 10 is avoided, information storage capacity may be reduced, and eventually, enlargement of a system configuration may be suppressed.

Furthermore, according to the information system that exerts the function, in a case where a determination result of a linkage state between the remote operation device 20 and the operation target (for example, distinction between an operable state or the inoperable state) is negative (NO in STEP212 in FIG. 4), the "second actual machine information" is not stored in the remote operation device 20 and is not transmitted to the external server 10 and thus is not stored in the external server 10, and for this reason, information storage capacity may be reduced, and eventually, enlargement of a system configuration may be suppressed.

### (Another Embodiment of Present Invention)

In the above embodiment, the information system includes the remote operation device 20, but the information system may include the work machine 40 as another embodiment, or may include a computer (such as the external server 10) separate from the remote operation device 20 and the work machine 40. The work machine 40 (operation target) may be operated by an operator in the work machine 40 through the actual machine operation mechanism 411.

In the above embodiment, information transmitted from the remote operation device 20 to the external server 10 in the "second actual machine information" may be deleted from the remote operation device 20. According to this, since waste caused by unlimited storage of the same information in both the remote operation device 20 and the external server 10 is avoided, information storage capacity may be reduced, and eventually, enlargement of a system configuration may be suppressed.

In the above embodiment, the hub that inputs video information to a capture board according to a determination result of transmitted video information is provided, but as another embodiment, a configuration in which the hub is not provided may be employed. For example, in this configuration, when the first actual machine information is received through the remote wireless communication device 222 in the remote operation device 20, the first actual machine information is at least temporarily stored or held in a storage device (or a designated region of a memory or the like) by the remote control device 200 regardless of a linkage state between the remote operation device 20 and the work machine 40.

Next, whether or not it is necessary to store the first actual machine information is determined according to a linkage state between the remote operation device 20 and the work machine 40. In a case where the determination result is negative, a captured image as the first actual machine information is deleted from a storage device of the remote operation device 20 by the remote control device 200. On the other hand, in a case where the determination result is positive, a captured image as the first actual machine information is output to the remote image output device 221 by the remote control device 200, and a captured image (first actual machine information) output to the remote image output device 221 is determined as a storage target.

Furthermore, a captured image (the first actual machine information) determined as a storage target is transmitted or uploaded as a storage target to the external server 10 by the remote control device 200 serving as the "designated device" through the remote wireless communication device 222. After the above, in a case where a certain period of time elapses, the captured image transmitted to the external server 10 is deleted from the storage device of the remote operation device 20. With this configuration as well, information storage capacity may be reduced, and eventually, enlargement of a system configuration may be suppressed.

In the above embodiment, whether or not it is necessary to store the first actual machine information is determined according to a linkage state between the remote operation device 20 and the operation target, and information determined to be unnecessary is not stored in the remote operation device 20 and is not transmitted to the external server 10 and thus is not stored in the external server 10 (NO in STEP212 in FIG. 4), but the information determined to be unnecessary may also be transmitted to the external server 10. For example, in this configuration, regardless of a linkage state between the remote operation device 20 and the operation target, information including the first actual machine information and the second actual machine information is at least temporarily stored or held in a storage device (or a designated region of a memory or the like). Further, whether or not it is necessary to store the information is determined according to a linkage state between the remote operation device 20 and the work machine 40, and a captured image (the first actual machine information) output to the remote image output device 221 is determined as a storage target. Next, the remote control device 200 serving as the "designated device" transmits or uploads the information and a determination result as to whether or not it is necessary to store the information to the external server 10 through the remote wireless communication device 222. Then, in a case where a certain period of time elapses, processing of continuously storing information that is a storage target for which the determination result shows necessity to store among pieces of the information transmitted or uploaded by the external server 10 and deleting information that is not a storage target for which the determination result shows unnecessity is executed. Further, in a case where a certain period of time elapses, the information transmitted to the external server 10 is deleted from a storage device of the remote operation device 20. With this configuration as well, information storage capacity may be reduced, and eventually, enlargement of a system configuration may be suppressed.

In the above embodiment, all of the first actual machine information and the second actual machine information are transmitted or uploaded from the remote operation device 20 as the "designated device" to the external server 10, but, as another embodiment, a part or all of the first actual machine information and the second actual machine information may be directly uploaded from the work machine 40 as the "designated device" to the external server 10 (see STEP410 to C10 in FIG. 4). In this case, the information system may include the actual machine control device 400 of the work machine 40, and the actual machine control device 400 may execute the determination processing as to whether or not it is necessary to store actual machine information (see STEP212 in FIG. 4), the transmission processing of actual machine information to the external server 10 (see STEP216 in FIG. 4), and the deletion processing of actual machine information from a storage device (see STEP218 in FIG. 4).

Furthermore, by configuring so as not to transmit, to the external server 10, information for which a determination result as to whether or not it is necessary to store shows unnecessity of the first actual machine information according to a linkage state between the remote operation device 20 and the operation target, it is possible to prevent information that is not a storage target from being stored in the external server 10. Alternatively, regardless of a linkage state between the remote operation device 20 and the operation target, information is transmitted or uploaded from the work machine 40 to the external server 10, a determination result as to whether or not it is necessary to store the information is transmitted from the remote operation device 20 or the work machine 40 to the external server 10, and in a case where a certain period of time elapses, processing of continuously storing information that is a storage target that the determination result shows necessity among pieces of information transmitted or uploaded by the external server 10 and deleting information that is not a storage target for which the determination result shows unnecessity is executed, so that information determined to be unnecessary can be prevented from being stored in the external server 10.

In the above embodiment, information of the first actual machine information and the second actual machine information is transmitted or uploaded to the external server 10, and the captured image is stored or held in an information storage resource or database in a cloud, but a storage destination of the information may include a large-capacity storage device (hard disk or the like) provided separately from a storage device of the remote control device 200. In this case, transmission or upload of information to the external server 10 may be omitted.

In the above embodiment, the "operation target" is the work machine 40 (or a construction machine), but, as another embodiment, the "operation target" may be any device such as an unmanned airplane, a vehicle, or another type of construction machine such as a crane, which can be remotely operated and has an acquisition function and a transmission function of internal information and/or external information.

Instead of the remote operation device 20 (or the work machine 40) as a designated device, the external server 10 may execute the determination processing as to whether or not it is necessary to store actual machine information (see STEP212 in FIG. 4).

The work machine 40 may have an autonomous operation function, and the remote operation device 20 may be configured to transmit commands to start, temporarily stop, and end autonomous operation of the work machine 40, and the work machine 40 may be configured to start, temporarily stop, and end autonomous operation in response to the commands.

An information system according to a first aspect of the present invention determines, according to a linkage state between an operation device and an operation target of the operation device, whether or not storage of information acquired by at least one of the operation device and the operation target as designated devices is necessary.

According to the information system having the above-described configuration, among pieces of information acquired by a designated device that is at least one of the operation device and the operation target of the operation device, information determined to be unnecessary according to a linkage state between the operation device and the operation target is not stored in the designated device or the like. For this reason, information storage capacity in a designated device or the like may be reduced, and eventually, enlargement of a system configuration may be suppressed.

To "acquire" information is a concept including acquiring (detecting and measuring) the information by using a sensor or the like and receiving the information by using a communication device. In addition to determination as to whether or not information primarily acquired by a first designated device and secondarily acquired (or received) by a second designated device from the first designated device needs to be stored in the second designated device and/or an external device, whether or not information primarily acquired by the first designated device needs to be stored in the first designated device and/or an external device may be determined.

An information system according to a second aspect of the present invention is the information system according to the first aspect, in which the operation target is preferably a work machine, and the operation device is preferably a remote operation device for remotely operating the work machine.

According to the information system having the above-described configuration, among pieces of information acquired by a designated device that is at least one of a work machine that is the operation target and a remote operation device that is the operation device, information determined to be unnecessary according to a linkage state between the remote operation device and the work machine is not stored in the designated device or the like. For this reason, information storage capacity in a designated device or the like may be reduced, and eventually, enlargement of a system configuration may be suppressed.

An information system according to a third aspect of the present invention is the information system according to the first or second aspect, in which the linkage state preferably includes an operable state in which the operation device can operate the operation target and an inoperable state in which the operation device cannot operate the operation target, and whether or not storage of the information is necessary is preferably determined according to whether the operation device and the operation target are in the operable state or the inoperable state.

According to the information system having the above-described configuration, among pieces of information acquired by the designated device that is at least one of the operation device and the operation target of the operation device, the information determined to be unnecessary according to distinction between an "operable state" and an "inoperable state" of the operation target by the operation device is not stored in the designated device or the like. For this reason, information storage capacity may be reduced, and eventually, enlargement of a system configuration may be suppressed.

An information system according to a fourth aspect of the present invention is the information system according to the first to third aspects, in which, according to a linkage state between the operation device and one operation target candidate determined as the operation target among a plurality of operation target candidates that may be an operation target of the operation device, whether or not storage of information acquired by the one operation target candidate as the designated device is necessary is preferably determined.

According to the information system having the above-described configuration, it is determined whether or not it is necessary to store information acquired by one operation target candidate as a designated device determined as an operation target among pieces of information acquired by a plurality of operation target candidates. For this reason, in addition to information storage capacity of a designated device or the like as described above, information processing capacity required for determining whether or not each piece of information acquired by a plurality of operation target candidates needs to be stored may be reduced, and eventually, enlargement of a system configuration may be suppressed.

An information system according to a fifth aspect of the present invention is the information system according to the first to fourth aspects, preferably including a communication device that transmits, to an external server, information determined to need to be stored.

According to the information system having the above-described configuration, among pieces of information acquired by a designated device that is at least one of an operation device and an operation target of the operation device, information determined not to need to be stored according to a linkage state between the operation device and the operation target is not transmitted to an external server, and is not stored in the external server. For this reason, in addition to information communication capacity between a designated device and an external server, information storage capacity of the external server may be reduced, and enlargement of a system configuration may be suppressed.

An information system according to a sixth aspect of the present invention is the information system according to the fifth aspect, in which information transmitted from the communication device to the external server is preferably deleted from the designated device.

According to the information system having the above-described configuration, among pieces of information acquired by a designated device, information transmitted from a communication device to an external server is deleted from the designated device. For this reason, since waste in which the same information is unlimitedly stored in both a designated device and an external server is avoided, overall information storage capacity by the designated device and the external server may be reduced, and eventually, enlargement of a system configuration may be suppressed.

An information system according to a seventh aspect of the present invention is the information system according to the first to sixth aspects, in which information determined not to need to be stored is preferably deleted from the designated device.

According to the information system having the above-described configuration, among pieces of information acquired by a designated device, information determined not to need to be stored is deleted from the designated device. For this reason, since waste in which information that does not need to be stored in a designated device is unlimitedly stored is avoided, information storage capacity of the designated device may be reduced, and enlargement of a system configuration may be suppressed.

An information system according to an eighth aspect of the present invention is the information system according to the first to seventh aspects, in which the operation target preferably includes an imaging device that acquires a camera image as the information.

According to the information system having the above-described configuration, in a case where an operation target corresponds to a designated device, a camera image determined to be unnecessary according to a linkage state between an operation device and the operation target among camera images acquired through an imaging device by the operation target is not stored in the operation target. For this reason, information storage capacity in a designated device may be reduced, and eventually, enlargement of a system configuration may be suppressed.

An information system according to a ninth aspect of the present invention is the information system according to the eighth aspect, in which the operation device preferably receives the camera image as the information from the operation target.

According to the information system having the above-described configuration, in a case where an operation device corresponds to a designated device, a camera image determined to be unnecessary according to a linkage state between the operation device and the operation target among camera images acquired through an imaging device by the operation target and received from the operation target by the operation device is not stored in the operation device. For this reason, information storage capacity in a designated device may be reduced, and eventually, enlargement of a system configuration may be suppressed.

An information system according to a tenth aspect of the present invention is the information system according to the first to ninth aspects, in which the designated device preferably includes a display device that displays the information.

According to the information system having the above-described configuration, information acquired by a designated device is displayed on a display device of the designated device. Also in this case, information determined to be unnecessary according to a linkage state between an operation device and the operation target is not stored in a designated device or the like. For this reason, information storage capacity in a designated device or the like may be reduced, and eventually, enlargement of a system configuration may be suppressed.

An operation device according to an eleventh aspect of the present invention includes: a display device that displays image data received from an operation target; and a processing device that determines, as a storage target, the image data displayed in a case where the operation target is being operated.

According to an operation device having the above-described configuration, image data received from the operation target and displayed on a display device in a state where the operation target is not operated is not determined as a storage target. For this reason, information storage capacity in an operation device may be reduced, and eventually, enlargement of a system configuration may be suppressed.

An operation device according to a twelfth aspect of the present invention includes: a display device that selects and displays image data received from a current operation target that is one operation target candidate among a plurality of operation target candidates that may be operation targets of an operation device; and a processing device that determines, as a storage target, the image data displayed on the display device when the operation target is operated by the operation device.

According to the operation device having the above-described configuration, in a state where one operation target candidate that is a current operation target among a plurality of operation target candidates is not operated, image data received from the operation target and displayed on the display device is not determined as a storage target. For this reason, information storage capacity in an operation device may be reduced, and eventually, enlargement of a system configuration may be suppressed.

## Claims

1. An information system that determines, according to a linkage state between an operation device and an operation target of the operation device, whether or not storage of information acquired by at least one of the operation device and the operation target as designated devices is necessary.

2. The information system according to claim 1, wherein
the operation target is a work machine, and
the operation device is a remote operation device for remotely operating the work machine.

3. The information system according to claim 1, wherein
the linkage state includes an operable state in which the operation device can operate the operation target and an inoperable state in which the operation device cannot operate the operation target, and
whether or not storage of the information is necessary is determined according to whether the operation device and the operation target are in the operable state or the inoperable state.

4. The information system according to claim 1, wherein according to a linkage state between the operation device and one operation target candidate determined as the operation target among a plurality of operation target candidates that may be an operation target of the operation device, whether or not storage of information acquired by the one operation target candidate as the designated device is necessary is determined.

5. The information system according to claim 1, further comprising a communication device that transmits, to an external server, information determined to need to be stored.

6. The information system according to claim 5, wherein information transmitted from the communication device to the external server is deleted from the designated device.

7. The information system according to claim 1, wherein information determined not to need to be stored is deleted from the designated device.

8. The information system according to claim 1, wherein the operation target includes an imaging device that acquires a camera image as the information.

9. The information system according to claim 8, wherein the operation device receives the camera image as the information from the operation target.

10. The information system according to claim 1, wherein the designated device includes a display device that displays the information.

11. An operation device comprising:
a display device that displays image data received from an operation target; and
a processing device that determines, as a storage target, the image data displayed in a case where the operation target is being operated.

12. An operation device comprising:
a display device that selects and displays image data received from a current operation target that is one operation target candidate among a plurality of operation target candidates that may be operation targets of an operation device; and
a processing device that determines, as a storage target, the image data displayed on the display device when the operation target is operated by the operation device.
